# EUROPEAN PATENT SPECIFICATION

(11) **EP 1 029 447 B1**
(45) Date of publication and mention of the grant of the patent: **28.06.2006**
(21) Application number: 00201926.3
(22) Date of filing: 05.10.1994
(51) Int. Cl.: A01J 5/017, A01K 1/01

(54) **A construction for automatically milking animals**
Vorrichtung zum automatischen Melken von Tieren
Dispositif de traite automatique d'animaux

(30) Priority: 11.10.1993 NL 9301753
(43) Date of publication of application: 23.08.2000
(62) Divisional of application: 94202888.7
(73) Proprietor: Lely Enterprises AG, 6300 ZUG (CH)
(72) Inventor: van der Lely, Cornelis, 6300 Zug (CH)
(74) Representative: Corten, Maurice Jean F.M.

(56) References cited:
- EP-A- 0 560 438
- US-A- 2 779 309
- US-A- 2 779 310

## Description

The invention relates to a construction for milking animals, as described in the preamble of claim 1.

Such a construction is known from EP-A-0432148.

It is an object of the invention to effect that the legs or other portions of the animal are kept clean to an improved extent. According to the invention this is achieved by the features of claim 1. In this manner, the rate of fall of the excrements can be kept low. Also splashing of the dung on hitting the bottom is thereby limited to a minimum. In order to render it easier for an animal to enter the milking box, the collecting member is further characterized in that it is so connected with the aid of a four-bar linkage that it can be moved in the longitudinal direction of the construction, and the entrance door of the construction is positioned in a longitudinal side thereof. To provide that the dung can be discharged, the collecting member includes, in accordance with a still further embodiment of the invention, a flexible pipe which is connected to a discharge system. In accordance with a still further embodiment of the invention, the feed trough is connected via a flexible pipe to an automatic feeding implement. In accordance with a still further embodiment of the invention, the feed trough is connected to the leading side of the construction in such a manner that it is movable with the aid of a four-bar linkage in the longitudinal direction of the construction.

In accordance with another embodiment of the invention, the floor of the milking box includes one or more slats of such a design that they form a continuous floor portion, as well as one or more slats of such a design that they form a grid floor.

The animal will experience that portion of the floor that is formed by continuous slats as more agreeable a place to stand in and/or walk about, so that the animal will take up the correct position in the box in a faster and more advantageous manner, since the animal will avoid the grid. In accordance with a still further embodiment of the invention, two slats are arranged such as to form a continuous floor, whilst between these two slats there is a grid floor, under which a discharge system for the dung is located at least partly, to which also the flexible pipe of the collecting member is connected.

For a better understanding of the invention and to show how the same may be carried into effect, reference will now be made, by way of example, to the accompanying drawings, in which:
Figure 1 is a side view of a milking cluster incorporating a milking robot, in which the circumference of a milk animal, in the present case a cow, is shown;
Figure 2 is a plan view in accordance with Figure 1, in which a detection member for determining the position of the teats is arranged next to the milking parlour;
Figure 3 shows the front portion of the robot arm of Figure 1, in which the teat cups are arrayed in a central position;
Figure 4 is a plan view of the milking robot head as shown in Figure 3;
Figure 5 illustrates the teat cups in the lifted state;
Figure 6 shows the position of the milking robot head when a front teat cup must be connected again, whilst the rear teat cups are already in the connected state;
Figure 7 is a plan view of the teat cups, in which at the left-hand side of the lay-out of the drawing the arrangement for connecting the teat cups to the teats is shown, whilst at the right-hand side of the drawing the teat cups are shown after they have already been connected to the teats, broken lines indicating the position of the outermost teat cup holders during renewed connection of an inadvertently disconnected front teat cup, and
Figure 8 shows an alternative embodiment of the robot head, in which a holder for a teat cup near this teat cup is provided with a vertical pivot shaft, about which the relevant teat cup can be rotated.

Corresponding components in the drawings have been given the same reference numerals. The invention is in no way limited to the embodiments shown and described here; they only serve by way of illustration of the inventive idea.

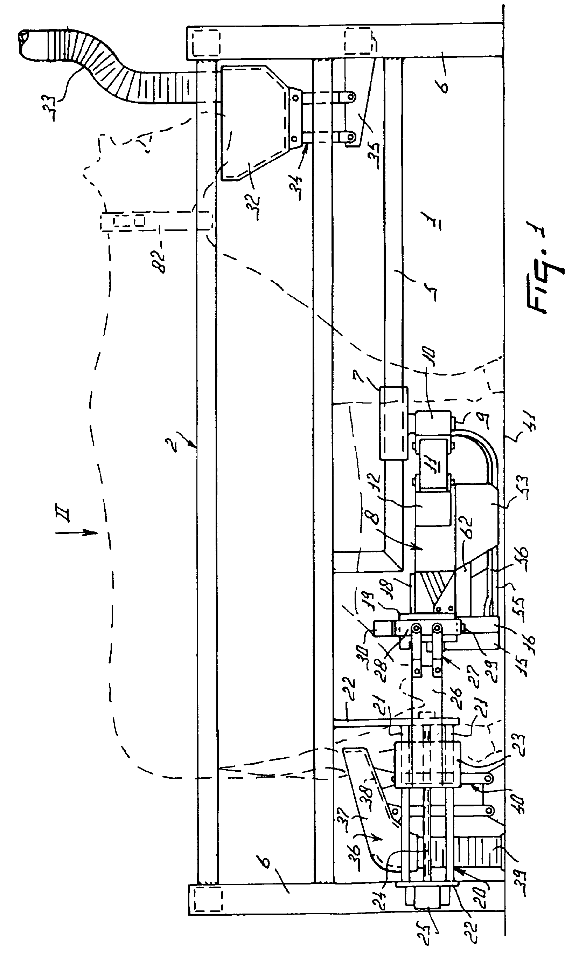

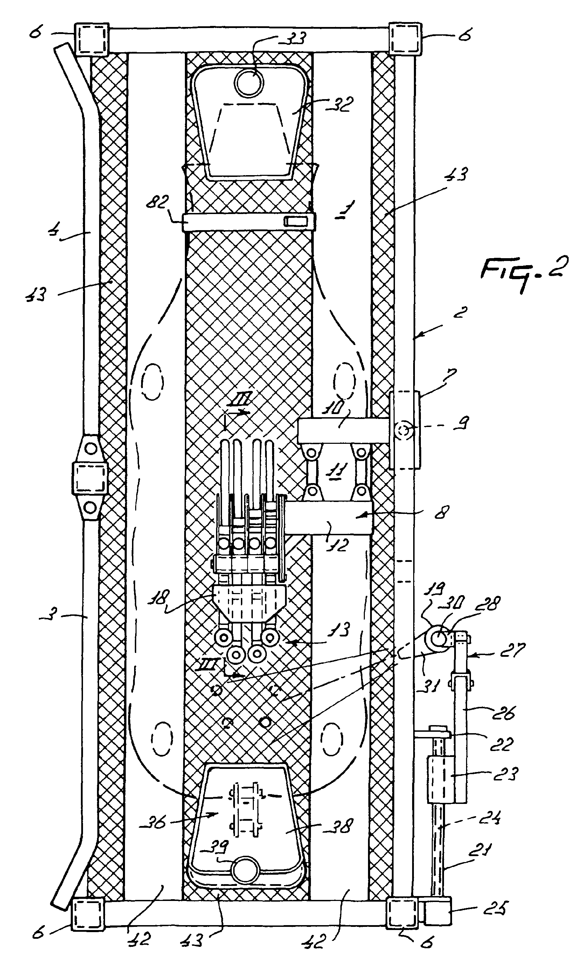

Figure 1 is a side view of a milking box 1, in which the contours of a cow are shown. The milking box 1 includes a railing 2 and is provided at one side with an entrance door 3 and an exit door 4 (Figure 2). At the facing side of the entrance and exit doors, the railing 2 of the milking box 1 is fitted with a longitudinal straight guide 5, which has one end connected to a girder 6 of the milking box 1 and its other end to the side wall of the railing 2. A slidable sleeve 7, which can be moved by a motor (not shown), is accommodated on the straight guide 5. Attached to the sleeve 7 is a milking robot 8 which by shifting of the sleeve 7 moves the milking robot 8 in the longitudinal direction of the milking box 1. A vertical shaft 9, about which a horizontal beam 10 of the milking robot 8 is rotatably attached, is secured to the bottom side of the sleeve 7. A second beam 12 is arranged parallel to the beam 10, at some distance therefrom by means of a four-bar linkage 11. Using a cylinder (not shown), the second beam 12 can be moved relative to the first beam 10 in a horizontal plane, so that a robot head 13, which comprises teat cups 14 to 17 and is attached to the end of the beam 12, can be moved transversely in the milking box. At its upper side, the milking robot head 13 is provided with a cover plate 18 which is slidable towards the teat cups and which, when the teat cups 14 to 17 are not connected to the teats, covers the apertures of the teat cups. At that side of the milking box 1 where the longitudinal straight guide 5 for the milking robot 8 is arranged, a movable detector 19 is disposed, which preferably is constituted by a laser. The position of the teats of an animal to be milked standing in the milking box 1 can be determined with the aid of the detector 19. The detector 19 is connected to a second longitudinal straight guide 20, which renders it possible to slide the detector 19 in the longitudinal direction of the box. The second longitudinal straight guide 20 comprises two spaced-apart rods 21, which are arranged one below the other next to the milking box 1 and have one end connected to the railing 2 of the milking box 1 via two girders 22. A second sleeve 23 is disposed in such a manner around the two longitudinal straight guides 20 that it is slidable in the longitudinal direction of the milking box 1. The second sleeve 23 can be moved along the two longitudinal straight guides 20 by means of a threaded spindle, which is inserted between the two longitudinal straight guides 20 and through the sleeve 23 and is driven by a stepping motor 25. Extending in the longitudinal direction of the milking box 1, the second sleeve 23 is provided with an arm 26 which at its end is provided with a second four-bar linkage 27, to which, extending transversely of the longitudinal direction of the milking box 1, a U-shaped holder 28 is attached. The detector 19 is clamped pivotally about a vertical shaft 29, between the U-shaped holder 28. The detector 19 can be pivoted about the vertical shaft 29 by means of a stepping motor 30 disposed on top of the U-shaped holder 28. The detector 29 is comprised of a vertically arranged cylindrical housing, on top of which a truncated cone-shaped jacket 31 is placed at a square angle. In the present embodiment, the cylindrical housing 19 accommodates a laser, which transmits a signal via a window in this housing and through the truncated cone-shaped jacket 31. It will be obvious that the detector may alternatively be formed by e.g. an ultrasonic sensor. The truncated coneshaped jacket 31 shields the window in the detector 19, so that the laser and/or e.g. the ultrasonic sensor will not so easily be put out of order by contamination. In addition to the fact that the detector 19 can be moved in the longitudinal direction of the milking box 1, it is also possible for the detector to be moved in height by means of a stepping motor (not shown), using the second four-bar linkage 27.

Near the leading side of the milking box 1 there is further arranged a feeding trough 32, which has at its upper side a flexible tube 33 which is connected to an automatic concentrate dosing device (not shown), for automatically discharging concentrate into the feeding trough 32. At the bottom side, the feeding trough 32 is connected to a vertically arranged third four-bar linkage 34, which has its other end connected to a beam 35 connected horizontally to the railing 2. Using a cylinder (not shown) which is connected to an arm of the third four-bar linkage 34, the feeding trough can be swivelled from the milking box 1 to thereoutside, so that the cow can no longer eat from the feeding trough 32.

The milking box 1 further incorporates, arranged near its trailing end, a dung collecting member 36. The dung collecting member 36 includes a container 37 which has a bottom 38 which extends obliquely downwardly from the cow. The bottom 38 encloses an angle of preferably approximately 20° with the horizontal. Connected to the lowest part of the bottom 38 there is a flexible discharge pipe 39 which leads to a dung cellar (not shown) under the milking box 1. At its bottom side, the container 37 is connected to a vertically arranged fourth four-bar linkage 40, which has its other side connected to the floor 41 of the milking box 1. By means of a cylinder (not shown) connected to the fourth four-bar linkage 40, it is possible to swing the container 37 aside to outside the milking box 1, so that, when a cow enters the milking box 1 via the entrance door 3, it will not be obstructed by the container 37. It will be obvious that, when the cow has taken up her position in the milking box 1, the container 37 will again be swivelled towards the cow, so that, when the cow drops dung, it will be collected in the container 37 and directly discharged into the dung cellar via the flexible discharge pipe 39. Since the bottom 38 is arranged at an oblique angle, the dropping rate of the dung will be low and thus the dung will be prevented from splashing on hitting the bottom 38.

To make the stay of the cow in the milking box 1 a pleasant stay, the floor 41 is provided in the region of the cows legs, with slats 42 which together form a continuous floor. Between and next to the slats 42, the floor 41 is further designed as a grid floor 43. The dung cellar (not shown) is located under the grid floor 43, so that dirt drops into the dung cellar via the grid 43.

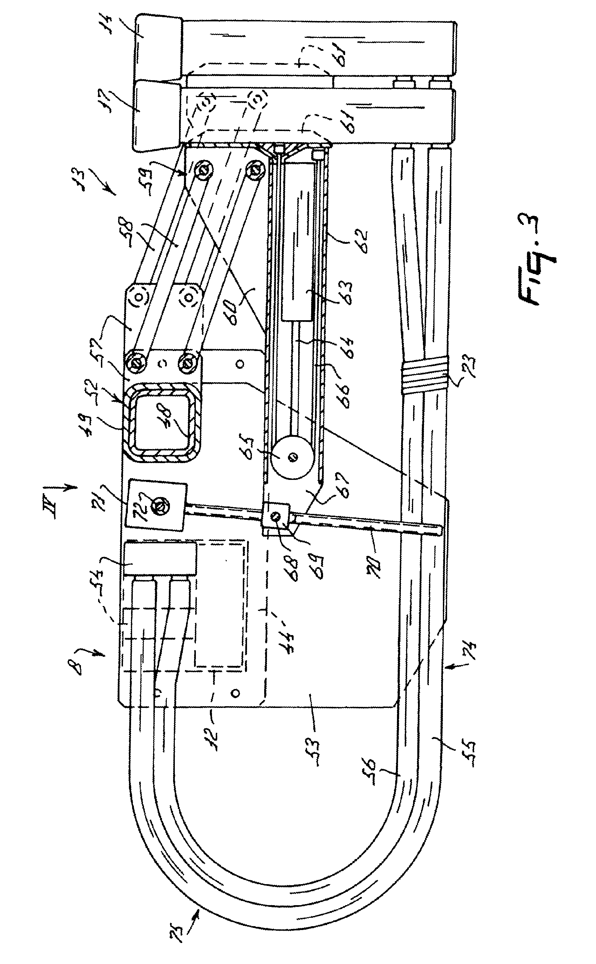

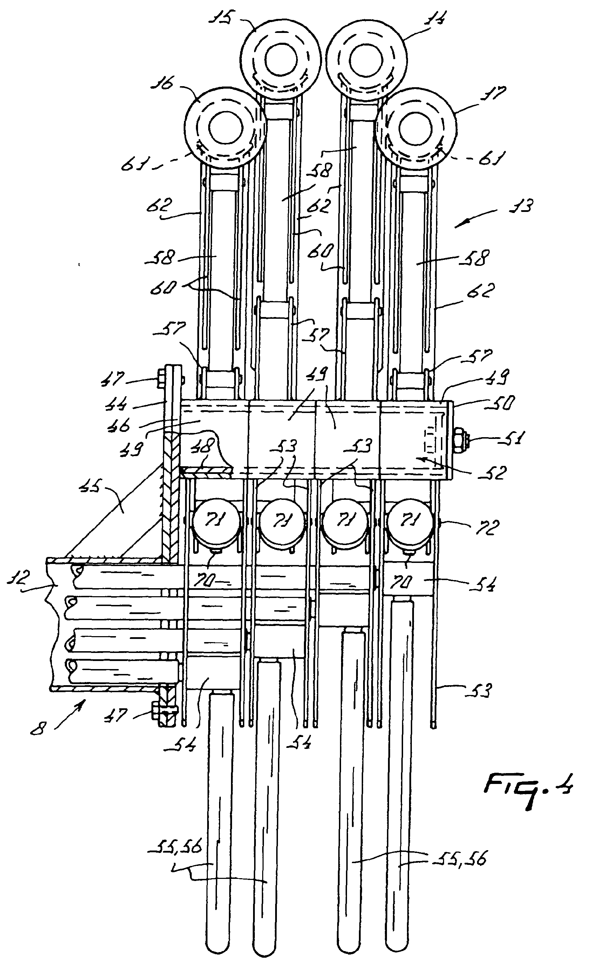

Figures 3 to 8 are further illustrations of the construction of the robot head 13. Figure 4 shows a portion of the second beam 12 of the milking robot 8, and it is shown that the second beam 12 is provided at its end with a plate 44, by means of which the robot head 13 is secured to the second beam 12. A stay rod 45 is arranged between the plate 44 and the second beam 12. The robot head 13 also includes a mounting plate 46 which corresponds to the plate 44 and is detachably bolted to the plate 44 by means of bolts 47. In a position perpendicular to the mounting plate 46 there is a box-like supporting beam 48, around which four units 49 are pushed which are locked by means of an end plate 50 with a bolt 51. The structure of each of the units 49 will now be described in greater detail with reference to Figure 3.

Each unit 49 includes a box-like carrier beam 52, which can be pushed over the supporting beam 48. The carrier beam 52 is provided with two spaced-apart plates 53, between which a connecting block 54 for a milk and pulsation tube 55, 56 is secured. At the leading side of the carrier beam 52, two spaced-apart lugs 57 are disposed, to which a rod system 58 forming a deformable quadrangle is connected. The rod system 58, which forms a deformable quadrangle, has its other end connected to a holder 59 for a teat cup (14; 15; 16; 17). Each of the holders 59 is assembled from two spaced-apart plates 60 which at their ends are interconnected so as to form a curved seat 61, against which a teat cup can bear. By means of their lower sides, the plates 60 are secured on a tubular holder 62, in which a cylinder 43 is accommodated. At the end of the piston rod 64 of the cylinder 63, a roller element 65 is disposed, around which a flexible cord 66 is passed. The cord 66 has one end connected to the tubular holder 62 and the other end to the teat cup. When a teat cup has been connected to a teat, the cylinder 63 is enabled and it is thus possible to pull the cord 66 from the tubular holder 62. When a teat cup is to be disconnected from a teat, the cylinder 63 is energized, as a result of which the cord 66 is retracted into the tubular holder 62, whereafter the teat cup is pulled up against the seat 61. At the other end of the tubular holder 62, two spaced-apart lugs 67 are attached, between which, pivotal about a horizontal shaft 68, a nut 69 is clamped. Inserted through the nut 69 is a threaded end 70, which has one end connected to a stepping motor 71. The stepping motor 71 is clamped between the plates 53 and is rotatable about a horizontal shaft 72. Using the transmission-element 70 which is controlled by the motor 71, it is possible to operate the lifting structure 58, 59, 60, 62, 70, 71, and thus to move the teat cups and also the holder 59 upwardly. Furthermore, each of the units 49 can be replaced individually when getting out of order.

Near the teat cups, the milk tube 55 and the pulsation tube 56 are wrapped together by a wrapping 73. The wrapping 73 may be in the form of a length of tape, an iron wire, a bandage, etc. Because of the wrapping 73, the first portion 74 of the milk and pulsation tubes 55, 56, which extend from the teat cup to just behind the plates 53, is relatively rigid and consequently oriented more or less in a horizontal plane. The second portion 75 of the milk and pulsation tubes 55, 56 extends in the shape of a loop and is located in a vertical plane. The second portion 75 of the milk and pulsation tubes 55, 56 is relatively flexible. During the upward motion of the teat cups, the first portion 74 will therefore bend to a minimum extent, whilst the second portion 75 bends relatively much. Since the first portion 74 is relatively rigid, the milk and pulsation tubes 55, 56 will be prevented from sagging and landing on the floor 41 of the milking box 1. An additional advantage is that, consequently, the head 13 of the milking robot can be moved at a relatively low level along the floor 41, without portions of the milking robot 8 coming into contact with the floor 41 of the milking box 1.

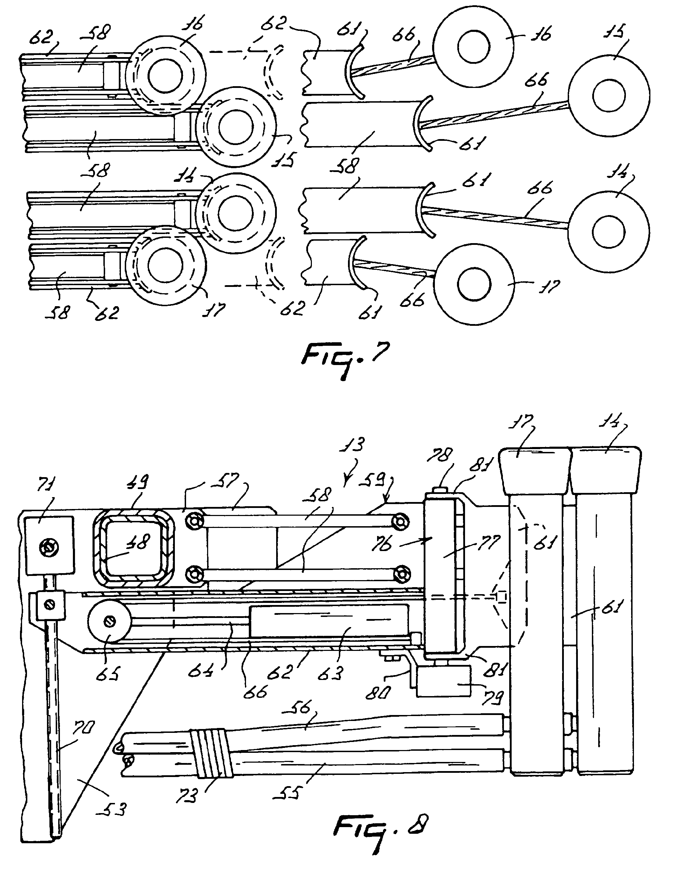

In the second embodiment as shown in Figure 8, the teat cups are pivotal about an upwardly directed shaft with the aid of a pivotal structure 76. The pivotal structure 76 includes a tube 77 attached to the ends of the plates 60. A pivotal shaft 78 is passed through the tube 77, which tube is connected at its bottom side to a stepping motor 79, which itself is rigidly connected to the tubular holder 62 via a support 80. The seat 61 of the teat cup is rigidly connected by means of lugs 81 to the pivotal shaft 78. By energizing the stepping motor 79, it is possible to rotate the seat 61 with the teat cup around the shaft 78. In this manner also teats which are very remote from each other, which e.g. in a plan view are arranged more or less in a square, can easily be reached by the teat cups 14 to 17 without the teat cups forming an obstruction to each other.

The mode of operation of the present construction for automatically milking animals will now be described in greater detail.

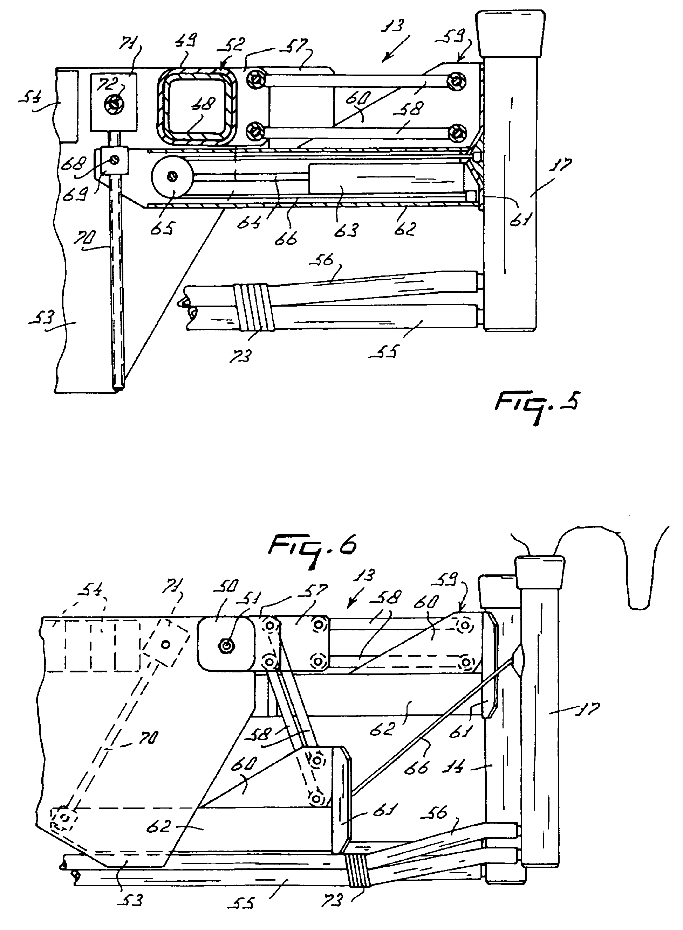

When a cow has entered the milking box 1 via the entrance door 3, this is recorded on the basis of the cow identification collar 82 around the neck of the cow and concentrate is discharged in the feeding trough 32 via the concentrate dosing implement. Thereafter the dung collecting member 36 is pivoted to near the rear side of the cow. In consequence thereof the detector 19 is moved in the longitudinal direction of the milking box 1, so that the teats of the cow arrive within the measuring range (taken in the vertical plane) of the detector. By means of the second four-bar linkage 27, the height at which the detector beam of the detector 19 is now located is adjusted such that, also in the horizontal plane, the teats come within the measuring range of the detector 19. Thereafter the stepping motor 30 is energized, so that the detector is pivoted about the vertical shaft 29. The detector 19 is preferably pivoted through an angle of approximately 25°. After the position of the four teats has been determined with the aid of the detector 19, the robot head 13 is pivoted to under the cow and, using the four-bar linkage 11, the robot head 13 is positioned in the lateral direction of the milking box 1. Thereafter the teat cups 14 to 17, by energizing the stepping motor 71, are moved to the central position as shown in Figure 3. Thereafter the robot head is moved in the longitudinal direction of the milking box 1 along the longitudinal straight guide 5, and the teat cup 14 is positioned under the left-hand rear teat. The stepping motor 71 of the teat cup 14 is then energized again, whereafter the teat cup 14 is lifted upwardly, as shown in Figure 5. After the teat cup has been evacuated via the milk tube 55, this cup is connected by this vacuum to the left-hand rear teat and thereafter the cylinder 63 of the teat cup 14 is disabled, so that the teat cup can get loose from the seat 61. Thereafter the teat cups 15, 16 and 17 are connected in the same manner one after the other to the further teats of the cow. In the right-hand half of Figure 7 it is illustrated how the teat cups 14 to 17 are arranged during milking. If now the teat cup 14 is inadvertently kicked from the teat or gets disconnected therefrom in any other way, the teat cup is immediately pulled up against the seat 61 of the relevant holder 59. So as to be able to connect the cup 14 again without the need for the cup 17 to be removed, the holder 59 of the teat cup 17 is thereafter pivoted downwards by means of the stepping motor 71 to the position shown in Figure 6. The holder 59 of the teat cup 17 is then in the position shown in Figure 7 by broken lines. Thereafter the holder 59 of the teat cup 14 is again moved towards the left-hand rear teat, all this in such a manner that the teat cup 14 arrives in a position such that its aperture is in a position under the left-hand rear teat. Thereafter the stepping motor 71 is energized again and the teat cup 14 is moved up and is connected to the teat. The robot head 13 can then again be moved away from the teat, so that the initial situation, such as it is shown at the right-hand half of Figure 7, is obtained. The teat cup 14 is then again in the connected state, without the need for disconnecting the further teat cups. It will be obvious that this procedure results in a considerable gain in time, and that the milking procedure of the other quarters need not be interrupted when the disconnected cup is to be connected to the teat again.

## Claims

1. A construction for milking animals, such as cows, with an entrance door (3) and an exit door (4), which are located at the same longitudinal side of the construction, and with a milking robot (8) for automatically milking animals, whilst the milking robot is arranged capable of being moved at or near the other longitudinal side of the construction, while furthermore at the leading side of the construction there is arranged a movable feed trough (32) which is connected to an automatic feed supply implement, **characterized in that** a movable collecting member (36) for the excrements of an animal present in the construction is arranged at the trailing side of the construction, while the collecting member (36) is placed just above the floor (41) of the construction and the bottom (38) of the collecting member (36) extends rearwardly and obliquely downwardly.

2. A construction as claimed in claim 1, **characterized in that** with the aid of a four-bar linkage (40) the collecting member (36) is connected capable of being moved in the longitudinal direction of the construction to the floor (41) thereof, and the entrance door (3) of the construction is located in a longitudinal side thereof.

3. A construction as claimed in claim 1 or 2, **characterized in that** the collecting member (36) is connected to a discharge system via a flexible pipe (39).

4. A construction as claimed in any one of the preceding claims, **characterized in that** the feed trough (32) is connected to an automatic feed supply implement via a flexible pipe (39).

5. A construction as claimed in any one of claims 1 to 4, **characterized in that** the feed trough (32) is connected to the leading side of the construction capably of being moved in the longitudinal direction of the construction with the aid of a four-bar linkage (34), and the exit door (4) of the construction is arranged in a longitudinal side thereof.

6. A construction as claimed in any one of the preceding claims, **characterized in that** the floor (41) thereof includes one or more slats of such a design as to form a continuous floor (42), as well as one or more slats of such a design as to form a grid floor (43).

7. A construction as claimed in claim 3 and claim 6, **characterized in that** two slats forming a continuous floor portion (42) are present, whilst between these two slats a grid floor (43) is arranged, under which a discharge system for the dung is located at least partly, to which also the flexible pipe (39) of the collecting member (36) is connected.

## Patentansprüche

1. Vorrichtung zum Melken von Tieren, wie z. B. Kühen, mit einer Eingangstür (3) und einer Ausgangstür (4), die an derselben Längsseite der Vorrichtung angeordnet sind, sowie mit einem Melkroboter (8) zum automatischen Melken von Tieren, wobei der Melkroboter an oder nahe der anderen Längsseite der Vorrichtung beweglich angebracht ist, wobei ferner an der Vorderseite der Vorrichtung ein beweglicher Futtertrog (32) angebracht ist, der mit einer automatischen Futterzuführvorrichtung verbunden ist,
**dadurch gekennzeichnet, daß** ein bewegliches Aufnahmeglied (36) für die Ausscheidungen eines in der Vorrichtung befindlichen Tieres an der Rückseite der Vorrichtung angeordnet ist, wobei das Aufnahmeglied (36) oberhalb des Bodens (41) der Vorrichtung angeordnet ist und sich der Boden (38) des Aufnahmegliedes (36) nach hinten und schräg nach unten erstreckt.

2. Vorrichtung nach Anspruch 1,
**dadurch gekennzeichnet, daß** das Aufnahmeglied (36) mit Hilfe eines Gelenkvierecks (40) in Längsrichtung der Vorrichtung bewegbar mit deren Boden (41) verbunden ist und die Eingangstür (3) der Vorrichtung an einer Längsseite derselben angeordnet ist.

3. Vorrichtung nach Anspruch 1 oder 2,
**dadurch gekennzeichnet, daß** das Aufnahmeglied (36) über ein flexibles Rohr (39) mit einem Entsorgungssystem verbunden ist.

4. Vorrichtung nach einem der vorhergehenden Ansprüche,
**dadurch gekennzeichnet, daß** der Futtertrog (32) über ein flexibles Rohr (33) mit einer automatischen Futterzuführvorrichtung verbunden ist.

5. Vorrichtung nach einem der Ansprüche 1 bis 4,
**dadurch gekennzeichnet, daß** der Futtertrog (32) mit der Vorderseite der Vorrichtung verbunden ist, wobei er mit Hilfe eines Gelenkvierecks (34) in Längsrichtung der Vorrichtung bewegbar ist, und daß die Ausgangstür (4) der Vorrichtung an einer Längsseite derselben angeordnet ist.

6. Vorrichtung nach einem der vorhergehenden Ansprüche,
**dadurch gekennzeichnet, daß** der Boden (41) derselben einen oder mehrere Stege aufweist, die derart ausgebildet sind, daß sie einen durchgehenden Boden (42) bilden, sowie einen oder mehrere Stege, die derart ausgebildet sind, daß sie einen Bodenrost (43) bilden.

7. Vorrichtung nach Anspruch 3 und Anspruch 6,
**dadurch gekennzeichnet, daß** zwei einen durchgehenden Boden (42) bildende Stege vorhanden sind, wobei zwischen diesen beiden Stegen ein Bodenrost (43) angebracht ist, unter dem ein Entsorgungssystem für den Mist zumindest teilweise angeordnet ist, mit dem auch das flexible Rohr (39) des Aufnahmegliedes (36) verbunden ist.

## Revendications

1. Dispositif de traite d'animaux tels que des vaches, doté d'une porte d'entrée (3) et d'une porte de sortie (4) qui sont situées sur le même côté longitudinal du dispositif, et d'un robot de traite (8) pour la traite automatique d'animaux, le robot étant aménagé de manière à être capable d'être déplacé sur ou près de l'autre côté longitudinal du dispositif, une mangeoire (32) mobile étant en outre aménagée sur le côté avant du dispositif, laquelle est reliée à une installation de fourniture d'alimentation automatique, **caractérisé en ce qu'**un membre de collecte (36) mobile pour les excréments d'un animal présent dans le dispositif est aménagé du côté de convoyage du dispositif, alors que le membre de collecte (36) est placé juste au-dessus du sol (41) du dispositif et que la partie basse (38) du membre de collecte (36) s'étend vers l'arrière et de façon oblique vers le bas.

2. Dispositif selon la revendication 1, **caractérisé en ce qu'**à l'aide d'une liaison à quatre barres (40), le membre de collecte (36) est relié de façon à être capable d'être déplacé dans le sens longitudinal du dispositif vers le sol (41) de celui-ci et **en ce que** la porte d'entrée (3) du dispositif est située dans un côté longitudinal de celui-ci.

3. Dispositif selon la revendication 1 ou 2, **caractérisé en ce que** le membre de collecte (36) est relié à un système d'évacuation via une conduite flexible (39).

4. Dispositif selon l'une quelconque des revendications précédentes, **caractérisé en ce que** la mangeoire (32) est reliée à une installation de fourniture d'alimentation automatique via une conduite flexible (39).

5. Dispositif selon l'une quelconque des revendications 1 à 4, **caractérisé en ce que** la mangeoire (32) est reliée au côté avant du dispositif de façon à être capable d'être déplacée dans le sens longitudinal du dispositif à l'aide d'une liaison à quatre barres (34) et **en ce que** la porte de sortie (4) du dispositif est aménagée dans un côté longitudinal de celui-ci.

6. Dispositif selon l'une quelconque des revendications précédentes, **caractérisé en ce que** le sol (41) de celui-ci comprend une ou plusieurs lattes d'une conception permettant de former un sol continu (42), ainsi qu'une ou plusieurs lattes d'une conception permettant de former un sol grillagé (43).

7. Dispositif selon les revendications 3 et 6, **caractérisé en ce que** deux lattes formant une partie de sol continue (42) sont présentes, alors qu'entre ces deux lattes, un sol grillagé (43) est aménagé, sous lequel un système d'évacuation pour les bouses est aménagé au moins partiellement, auquel est également reliée la conduite flexible (39) du membre de collecte (36).
